Europäisches Patentamt

European Patent Office

Office européen des brevets

(19)

(11) **EP 0 713 592 B1**

(12) **EUROPÄISCHE PATENTSCHRIFT**

(45) Veröffentlichungstag und Bekanntmachung des Hinweises auf die Patenterteilung:
**09.07.1997 Patentblatt 1997/28**

(21) Anmeldenummer: **94922830.8**

(22) Anmeldetag: **01.08.1994**

(51) Int Cl.[6]: **G06K 9/32**

(86) Internationale Anmeldenummer:
**PCT/DE94/00893**

(87) Internationale Veröffentlichungsnummer:
**WO 95/04977 (16.02.1995 Gazette 1995/08)**

(54) **VERFAHREN ZUR ERKENNUNG DER RÄUMLICHEN LAGE UND DREHLAGE VON IN GEEIGNETER WEISE MARKIERTEN OBJEKTEN IN DIGITALEN BILDFOLGEN**

PROCESS FOR RECOGNIZING THE POSITION AND ROTATIONAL POSITION IN SPACE OF SUITABLY MARKED OBJECTS IN DIGITAL IMAGE SEQUENCES

PROCEDE DE RECONNAISSANCE DE LA POSITION ET DE LA POSITION DE ROTATION DANS L'ESPACE D'OBJETS MARQUES DE MANIERE APPROPRIEE DANS DES SEQUENCES D'IMAGES NUMERIQUES

(84) Benannte Vertragsstaaten:
**DE FR GB IT NL**

(30) Priorität: **09.08.1993 EP 93112720**
**19.11.1993 DE 4339534**

(43) Veröffentlichungstag der Anmeldung:
**29.05.1996 Patentblatt 1996/22**

(73) Patentinhaber: **SIEMENS AKTIENGESELLSCHAFT**
**80333 München (DE)**

(72) Erfinder:
• **MAGGIONI, Christoph**
**D-81541 München (DE)**
• **WIRTZ, Brigitte**
**D-83607 Holzkirchen (DE)**

(56) Entgegenhaltungen:
**DE-A- 3 718 620          US-A- 4 776 464**

• **FUNKSCHAU, Bd.66, Nr.21, Januar 1994, MUNCHEN DE Seiten 82 - 7, XP425242 C. MAGGIONI ET B. KÄMMERER 'Im Handumdrehen'**
• **IEEE PACIFIC RIM CONF. ON COMMUNICATIONS, COMPUTERS AND SIGNAL PROCESSING, 1. Juni 1989, VICTORIA, CA Seite 301-5 Z. ZHOU ET AL 'Morphological skeleton transforms for determining position and orientation of pre-marked objects' in der Anmeldung erwähnt**
• **SYSTEMS & COMPUTERS IN JAPAN., Bd.23, Nr.11, September 1991, NEW YORK NY Seiten 62 - 73, XP380838 K. HEMMI ET AL '3-D natural interactive interface - using marker tracking from a single view'**
• **F.M.Wahl, "Digitale Bildverarbeitung", Springer-Verlag 1984, Kapitel 6.4 "Bilddarstellung durch Momente"**

**Beschreibung**

Die Erfindung betrifft ein Verfahren zur Erkennung der räumlichen Lage und Drehlage von in geeigneter Weise markierten Objekten in digitalen Bildfolgen, insbesondere auch zur Detektion und Verfolgung der Bewegungen einer menschlichen Hand, auf der, z.B. mit Hilfe eines speziell hierfür angefertigten Handschuhs, geeignete Markierungen angebracht sind. Solche Verfahren werden zur Steuerung von Datenverarbeitungsanlagen oder damit zusammenhängenden Einrichtungen mit Hilfe von Handzeichen (Gesten) in verschiedenen Bereichen der Technik, in denen eine möglichst einfache Mensch-Maschine-Kommunikation wichtig ist, benötigt. In dem Aufsatz [Cla91] von M.A. Clarkson, An easier interface, BYTE 16(2), Februar 1991, wird "3D-Rooms" ein eindrucksvolles Beispiel eines dreidimensionalen Systems, einer Erweiterung der bekannten zweidimensionalen "Desktop"-Benutzeroberflächen für die heute üblichen Computer mit graphischer Benutzeroberfläche, beschrieben, welches den Wert dreidimensionaler Eingabegeräte besonders verdeutlicht. Ein Verfahren zur Erkennung der räumlichen Lage und Drehlage von in geeigneter Weise markierten Objekten in digitalen Bildfolgen stellt also einen wichtigen Baustein für zukünftige, dem Menschen besser gerecht werdende Benutzerschnittstellen für Datenverarbeitungssysteme dar.

Aus der Literatur bekannte Ansätze [Kru91], [Vin91], [Wel 91] und [Seg92] auf der Grundlage der Bildverarbeitung weisen alle den Nachteil auf, daß sie nur zweidimensionale Gesten erkennen können und daß ein gleichförmiger Bildhintergrund mit vorgegebenen Eigenschaften vorausgesetzt werden muß.

Aus dem Dokument DE-A-37 18 620 ist ein Verfahren zur Drehwinkelbestimmung mittels eines sogenannten Inter-Zwei-Schwerpunkte-Verfahrens bekannt. Dieses Verfahren setzt jedoch die Kenntnis der Position des Objektes und seine Drehlage in den anderen beiden Raumrichtungen voraus. Es kann also nur die Drehlage um eine Achse erkennen, keine räumlichen Lagen.

Der Erfindung liegt die Aufgabe zugrunde, ein Verfahren zur Erkennung der räumlichen Lage und Drehlage von in geeigneter Weise markierten Objekten in digitalen Bildfolgen anzugeben, welches diesen Beschränkungen nicht unterliegt, sondern die Erfassung dreidimensionaler Gesten vor beliebigem Bildhintergrund ermöglicht.

Diese Aufgabe wird erfindungsgemäß durch ein Verfahren zur Erkennung der räumlichen Lage und Drehlage von in geeigneter Weise markierten Objekten in digitalen Bildfolgen mit Merkmalen nach Anspruch 1 gelost.

Die Bilder einer Bildfolge werden durch Anwendung einer Schwellwertoperation binarisiert. Die Momente der einzelnen Segmente jedes einzelnen Binärbildes der Binärbildfolge bis zu einer vorgegebenen Ordnung ermittelt. Aus den Momenten werden Parameter ermittelt, die die Lage und Drehlage der Segmente im Raum beschreiben; anhand dieser Parameter und der Momente werden die Markierungen und ihre Lage und Drehlage im Raum bestimmt. Unter Verwendung der bekannten Anordnung der Markierungen auf den markierten Objekten wird schließlich die Lage und Drehlage der markierten Objekte im Raum ermittelt.

Vorteilhafte Weiterbildungen der Erfindung ergeben sich aus den Unteransprüchen.

Figur 1 zeigt ein von einer CCD-Kamera aufgenommenes, gerastertes Grauwertbild einer für die Durchführung des erfindungsgemäßen Verfahrens mit Markierungen versehenen menschlichen Hand.

Figur 2 zeigt das Bild der Figur 1 in binarisierter Form.

Figur 3 zeigt in schematischer Weise eine Konturverfolgung der Konturen eines binären Segments, wie sie bei einer bevorzugten Ausführungsform des erfindungsgemäßen Verfahrens zur Anwendung kommt.

Figur 4 zeigt das Ergebnis der durch Figur 3 illustrierten Konturverfolgung am Beispiel des Bildes aus Figur 2.

Figur 5 zeigt in schematischer Weise eine bevorzugte Ausführungsform von Objektmarkierungen, wie sie im Zusammenhang mit dem erfindungsgemäßen Verfahren vorteilhaft verwendet werden können.

Figur 6 zeigt ein Schema zur Verdeutlichung einer bevorzugten Ausführungsform des erfindungsgemäßen Verfahrens.

Figur 7 zeigt in schematischer Weise einen projezierten Kreis, also eine Elipse mit den Hauptachsen und weiteren Parametern.

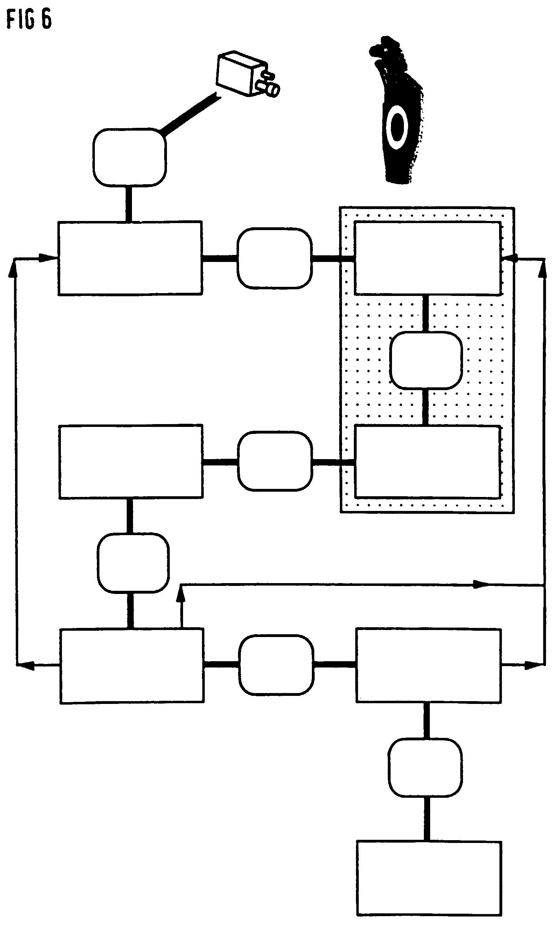

Figur 8 zeigt in schematischer Weise zwei kreisförmige, projezierte Markierungen.

Figur 9 zeigt in schematischer Weise die adaptive Schwellwertbildung am Beispiel zweier kreisförmiger, projezierter Markierungen.

Figur 10 zeigt in schematischer Weise die Einschränkung des Suchraumes mit Hilfe einer Bewegungsschätzung.

Im folgenden wird die Erfindung anhand bevorzugter Ausführungsbeispiele und mit Hilfe der Figuren näher beschrieben.

Die Aufgabe der Bildverarbeitung bei der Steuerung von Datenverarbeitungssystemen mit Hilfe von Gesten einer menschlichen Hand ist die Erkennung der Bewegungen und Gesten der menschlichen Hand. Das dazu im folgenden beschriebene Verfahren kann aber über den Bereich der Handgestenerkennung hinaus auf die Erkennung der räumlichen Lage und Position beliebiger markierter Objekte angewendet werden. Die dabei eingesetzten Bildverarbeitungsverfahren müssen vor allem unabhängig gegenüber Störungen im Bildfolgenmaterial sein, unabhängig sein gegenüber Schwankungen der Umgebungshelligkeit, gegenüber Bewegungen im Bildhintergrund und dabei eine Verarbeitungsgeschwindigkeit zwischen 10 und 25 Bildern pro Sekunde aufweisen.

Besonderes Augenmerk gilt hierbei bei der Geschwindigkeit der Bildverarbeitung. Ist diese nämlich zu gering, so entsteht eine große Verzögerung zwischen den Handbewegungen des Benutzers und den damit gesteuerten Auswirkungen in Bezug auf die jeweils gesteuerte Anwendung. Es hat sich durch Experimente herausgestellt, daß dabei eine Reaktionszeit von 1/10 Sekunde nicht überschritten werden darf, wobei eine Reaktionszeit von 1/25 Sekunde optimal erscheint.

Durch diese einschränkende Anforderung an die Verarbeitungsgeschwindigkeit der verwendeten Hardware erschien in vielen Veröffentlichungen die Verwendung relativ kostspieliger Spezialhardware zur Bildverarbeitung in Echtzeit oder aber sehr schneller und dennoch leistungsfähiger Bildverarbeitungsalgorithmen unausweichlich. Die im Rahmen dieser Patentanmeldung beschriebenen Bildverarbeitungsalgorithmen nutzen anwendungspezifisches Wissen in hohem Maße aus, ohne daß jedoch ihre allgemeine Anwendbarkeit hierdurch eingeschränkt würde. Bei einem bevorzugten Ausführungsbeispiel der erfindungsgemäßen Verfahren wird in Bildern, die mit einer Grauwertkamera aufgenommen sind, eine menschliche Hand und deren Bewegungen erkannt, wobei diese Hand mit einem schwarzen Handschuh und darauf angebrachten Markierungen besonders markiert ist. Durch den Umstand, daß die Größe und die Form dieser Markierungen im voraus bekannt sind, lassen sich Verfahren zur Bildverarbeitung stark vereinfachen.

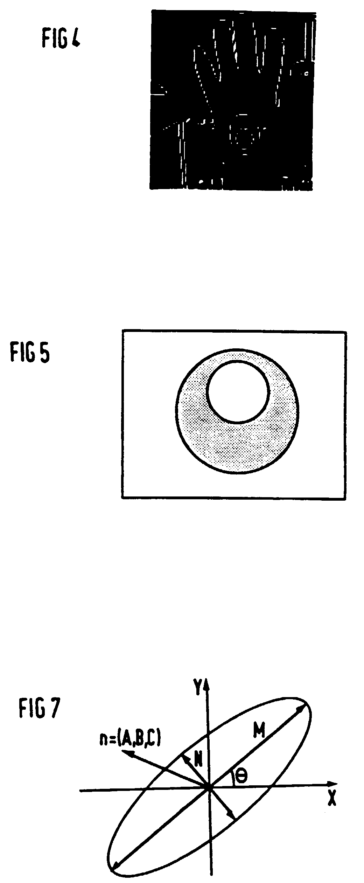

In einem Grauwertbild mit sich verändertem Hintergrund eine menschliche Hand in Echtzeit zu erkennen ist in dieser Allgemeinheit ein sehr schwieriges Problem. Dieses Problem wird bedeutend vereinfacht, wenn die Hand sich deutlich vom Hintergrund abhebt und auf der Hand Markierungen angebracht sind, deren Form und Größe bekannt sind. Aus diesem Grund ist es vorteilhaft im Zusammenhang mit dem erfindungsgemäßen Verfahren z. B. einen schwarzen Handschuh mit darauf angebrachten weißen Markierungen zu verwenden, den der Benutzer des erfindungsgemäßen Verfahrens über seine Hand zieht. Das Bild der menschlichen Hand wird in diesem Verfahren mit Hilfe einer Grauwertkamera aufgenommen, einer adaptiven Schwellwertoperation unterzogen und so in ein segmentiertes Binärbild umgewandelt. Anschließend werden zu allen Bildobjekten Merkmale berechnet und anhand dieser Merkmale die Markierungen erkannt und ihre Lage im Raum berechnet. Figur 6 verdeutlicht in schematischer Weise den Ablauf des erfindungsgemäßen Verfahrens.

Die Bilder werden z. B. mit Hilfe einer CCD-Kamera aufgenommen, die sich vorzugsweise auf dem Computermonitor oder in seiner Nähe befindet. Sie wird zu Beginn des Verfahrens so eingestellt, daß ihr Aufnahmebereich mit einem dem Benutzer für seine Handbewegungen angenehmen Raumbereich übereinstimmt. In Versuchen hat sich hierfür ein Zoomobjektiv als sinnvoll, aber nicht unbedingt nötig herausgestellt.

Das von der Kamera gelieferte Bild in Form eines Videosignals wird z. B. durch einen Framegrabber digitalisiert und liegt anschließend im Speicher des Rechners als digitales Bild, z. B. der Größe 512 x 512 Bildpunkte vor, wobei jeder Bildpunkt (Pixel) durch eine 8-Bit breite Zahl, welche den Grauwert dieses Bildpunktes beschreibt, dargestellt wird.

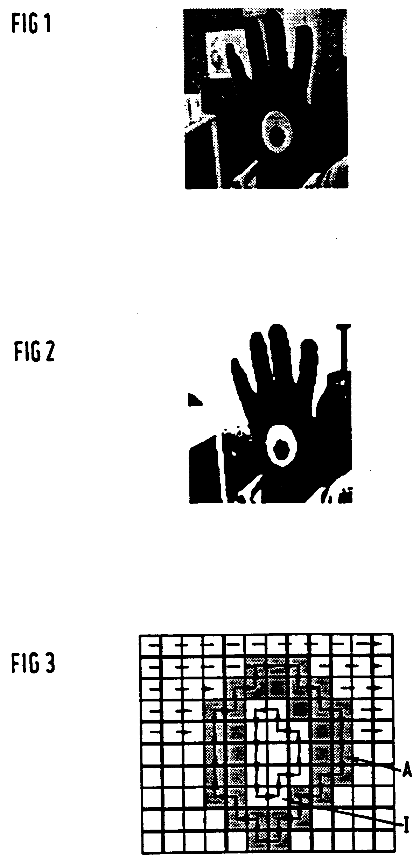

Fig. 1 zeigt ein Beispiel eines gerasterten Grauwertbildes, auf dem eine schwarze Hand mit darauf angebrachten Markierungen dargestellt ist. Da die Kamera vom Benutzer nach seinen Wünschen ausgerichtet wird, ist die Lage ihrer optischen Achse im Raum nicht sofort bekannt. Deshalb wird nach dem Einstellen der Kamera im allgemeinen ein Kalibrierungsschritt nötig sein. In diesem Kalibrierungsschritt, wird z. B. die Lage der optischen Achse der Kamera bestimmt und es wird z. B. die Größe der Markierungen in einer vorgegebenen Entfernung vom Objektiv vermessen, so daß später die Entfernung der Hand mit Hilfe der Größe der Markierungen bestimmt werden kann.

Nach der Aufnahme des Bildes einer menschlichen Hand oder eines anderen bewegten Objektes mit Hilfe einer CCD-Kamera, der anschließenden Digitalisierung und Speicherung dieses Bildes im Computer wird zur Datenreduktion eine Binarisierung dieses Grauwertbildes durchgeführt. Eine dazu benutzte Schwelle wird zu Beginn vorgegeben oder interaktiv bestimmt und dann adaptiv an die vorhandenen Lichtbedingungen angepaßt. Die Adaption der Schwelle wird noch später beschrieben werden.

Das von der Kamera aufgenommene Grauwertbild wird als Binärbild nun weiterverarbeitet mit dem Ziel die auf dem Objekt, z. B. der Hand angebrachten Markierungen zu segmentieren. Hierzu wird ein an sich bekannter Algorithmus von T. Pavlidis: "Algorithms for Graphics and Image Processing", Springer 1982 angewandt. Dabei wird das Binärbild zeilenweise abgetastet. Wird ein Sprung von 0 nach 1, d. h. z. B. von dunkel nach hell detektiert, und wurde der aktuelle Bildpunkt noch nicht aufgesucht, so wird die Kontur im Uhrzeigersinn abgelaufen, wobei die Koordinaten der Bildpunkte in einer Liste gespeichert und die dabei aufgesuchten Bildpunkte als schon verarbeitet markiert werden. Bei einem Sprung von 1 nach 0 wird die Kontur entgegengesetzt zum Uhrzeigersinn abgetastet. Am Ende dieses Verarbeitungsschrittes steht im Speicher des Computers eine Liste der Objektkonturen zur Verfügung, wobei zusätzlich bekannt ist, ob es sich um ein schwarzes Objekt auf weißem Grund oder um den umgekehrten Fall handelt. Figur 3 verdeutlicht in schematischer Weise die Durchführung der Konturverfolgung nach Pavlidis.

Figur 4 zeigt das Ergebnis der durch Figur 3 illustrierten Konturverfolgung am Beispiel des Bildes aus Figur 2.

Zur weiteren Durchführung des erfindungsgemäßen Verfahrens ist die Erkennung der markierten Objekte unabhängig von ihrer Lage, Größe und Orientierung im Raum erforderlich. In der Bildverarbeitung wurden Verfahren entwickelt, die es ermöglichen, Merkmale aus Bildern zu extrahieren, die invariant gegenüber den obengenannten Transformationen sind. Zu diesem Zweck sind besonders die sogenannten Momente geeignet, welche z. B. in der Veröffentlichung von Zhou et al "Morphological Skeleton Transforms for Determining position and orientation of Pre-Marked Objects", aus IEEE Pacific Rim Conference on Communication, Computers ans Signal Processing, pp. 301 - 305, 1989 beschrieben wurden. Das Moment $m_{p,q}$ der Ordnung p,q einer Funktion f(x,y) wird dabei definiert als

$$m_{p,q} = \int_{-\infty}^{+\infty} \int_{-\infty}^{+\infty} x^p y^q f(x, y) dx dy$$

wobei f(x,y) z.B. der Grauwert eines Bildpunktes an der Stelle (x,y) ist. In der für die Bildverarbeitung geeigneten diskreten Form lautet die Definition dieses Moments

$$m_{p,q} = \sum_{x=1}^{M} \sum_{y=1}^{N} x^p y^q f(x, y) \Delta x \Delta y \,,$$

wobei M und N die Anzahl der Bildpunkte in x- und y-Richtung, also die Bildgröße bezeichnen. Die oben definierten Momente wurden für den Fall für Grauwertbildern definiert, wobei über den Wertebereich der Funktion f keine einschränkenden Annahmen gemacht wurden. Im Falle des vorliegenden erfindungsgemaßen Verfahrens wurden die Bilder bereits binarisiert wodurch f lediglich die binären Werte 1 oder 0 annimmt. Damit vereinfacht sich die Definition des Moments zu

$$m_{p,q} = \sum_{x=1}^{M} \sum_{y=1}^{N} x^p y^q \Delta x \Delta y \,.$$

Den Momenten niederer Ordnung kann dabei leicht eine anschauliche Interpretation zugeordnet werden: Das Moment $m_{0,0}$ ist gleich der Fläche eines Objektes. Die Quotienten $\frac{m_{1,0}}{m_{0,0}}$ bzw. $\frac{m_{0,1}}{m_{0,0}}$ geben die x- bzw. y-Koordinaten des Objektschwerpunkts an. Mit Hilfe dieser Schwerpunktkoordinaten kann der Schwerpunkt jedes Objektes in den Ursprung transformiert gedacht werden. Berechnet man die weiteren Momente in Bezug auf diese Koordinatenursprungswahl, so werden sie auch Zentralmomente genannt. Die Zentralmomente sind also wie folgt definiert:

$$\tilde{m}_{p,q} = \sum_{(x,y)\in D} (x - \bar{x})^p (y - \tilde{y})^q \Delta x \Delta y \,.$$

Zur Berechnung eines Momentes sind genausoviele Operationen nötig wie die Fläche des Objektes Bildpunkte enthält. Die Fläche eines Objektes wächst im allgemeinen quadratisch mit seiner Größe. Mit Hilfe des Satzes von Green ist es jedoch möglich die Definition der Momente so umzuformen, daß die Momente einer Menge D (ohne innere Locher) nur aufgrund ihrer Umrißlinie U berechnet werden können. Die Zahl der Bildpunkte auf der Umrißlinie steigt nur linear mit der Objektgröße an. Die Komplexität und der Rechenaufwand zur Berechnung der Momente ermäßigen sich daher um eine ganze Größenordnung. Enthält ein Objekt Löcher, so können die Momente trotzdem mit Hilfe des Green'schen Satzes berechnet werden, wenn man die Berandungskurven der Löcher, im gegenläufigen Sinn zur äußeren Berandung des Objektes durchlaufen, als weitere Bestandteile der Umrißlinie des Objektes behandelt.

Seien nun D eine Menge und U ihre Umrißlinie, so können die Momente der Menge D nach dem Green'schen Satz auch wie folgt berechnet werden:

$$m_{p,q} = \sum_{(x,y)\in D} (ax^p y^{q+1} \Delta x + bx^{p+1} y^q \Delta y)$$

hierbei müssen die Koeffizienten a und b der Gleichung

$$b(p+1) - a(q+1) = 1$$

genügen. Wichtige Spezialfälle dieser allgemeinen Formel sind

$$m_{p,q} = \frac{1}{p+1} \sum_{(x,y) \in B} x^{p+1} y^q \Delta y$$

oder

$$m_{p,q} = \frac{-1}{q+1} \sum_{(x,y) \in B} x^p y^{q+1} \Delta x \ .$$

Die äußeren Umrißkurven sind dabei im Uhrzeigersinn, die inneren Umrißkurven - im Fall von Löchern - im Gegenuhrzeigersinn zu durchlaufen. Bei dem erfindungsgemäßen Verfahren werden die ersten drei Momente zusammen mit der Konturverfolgung berechnet. Außerdem werden die maximale Ausdehnung der Objekte in x- und y-Richtung erfaßt. In einem zweiten Schritt werden die höheren Zentralmomente, so weit benötigt, berechnet.

Zur Identifikation der markierten Objekte gilt es nun diejenigen Objekte zu finden, welche den Markierungen entsprechen. Bei einem bevorzugten Ausführungsbeispiel des erfindungsgemäßen Verfahrens werden als Markierungen zwei exzentrisch zueinander angeordnete Kreise verwendet, von denen der eine möglichst hell (weiß) der andere möglichst dunkel (schwarz) ist. Diese Anordnung der Markierungsstrukturen hat den Vorteil, daß die gesamte Anordnung nicht rotationsinvariant ist, und daß perspektivische Projektionen dieser Anordnung leicht zu berechnen sind. Diese Eigenschaften der bevorzugten Ausführungsform der Objektmarkierungen sind für das erfindungsgemäße Verfahren besonders geeignet. Hierdurch kann die Drehlage der markierten Objekte besonders zuverlässig detektiert werden.

Nachdem die Konturverfolgung und die Berechnung der Momente abgeschlossen ist, werden nacheinander verschiedene Tests durchgeführt um die Markierungen im Bild zu identifizieren:

Da die Größe der Markierungen auf der Handfläche (bzw. auf den Objekten) bekannt ist und da ein minimaler und maximaler Abstand von der Kamera leicht vorgegeben werden kann (z. B. 20 cm bis 4000 cm) ist es möglich eine untere Schranke für die Fläche dieser Markierungen im Bild anzugeben. Das Moment $m_{0,0}$ gibt aber gerade die Fläche des Objekts an. Also können alle Objekte die größer oder kleiner sind sofort aussortiert werden.

Zur Bestimmung der Kreisförmigkeit wird als grober Anhaltspunkt die maximale Ausdehnung der detektierten Objekte in x- und y-Richtung benutzt um die Ähnlichkeit jedes Objektes mit einem Kreis zu berechnen. Ferner wird nach einem großen schwarzen Objekt gesucht, in dem sich ein kleineres weißes Objekt (oder umgekehrt) befindet und deren Größenverhältnisse innerhalb gewisser Grenzen liegen. Es ist für den Fachmann leicht möglich noch weitere und unter Umständen bessere Kriterien zur Detektion der Markierungsstrukturen zu finden. Es hat sich jedoch in Experimenten gezeigt, daß es mit den oben angegebenen Kriterien fast immer möglich war die Markierungen eindeutig im Bild zu identifizieren.

Nach der Identifikation der Markierungsstrukturen kann die Position der Schwerpunkte der Markierungsstrukturen und damit über die bekannte Anordnung der Markierungsstrukturen auf den Objekt (Hand) auch die Position der Hand im Raum in x- und y-Richtung ermittelt werden. Die Größe der Markierungsstruktur gibt über die bekannte Fläche den Abstand von der Kamera und damit die Position in z-Richtung an. Damit ist die Lage des Objektes im Raum bekannt.

Nachdem so die Lageparameter der Markierungen und damit der Objektschwerpunkte ermittelt wurden geht es im folgenden um die Bestimmung der Winkel um welches das Objekt bezüglich der drei räumlichen Achsen gedreht angeordnet ist. Zur Bestimmung dieser Drehwinkel wird die Tatsache ausgenutzt, daß der Mittelpunkt des inneren Kreises der in Figur 5 gezeigten Markierung und der des äußeren Kreises nicht zentrisch zueinander sind, sowie der Umstand das ein Kreis unter räumlicher Projektion in eine Ellipse überführt wird, aus deren Parametern man auf den Projektionswinkel schließen kann. Es sind also die Parameter einer Ellipse zu bestimmen und daraus die Neigungswinkel der Kreisebene zur Bildebene zu berechnen. Der Flächennormalenvektor der Kreisebene der Markierung sei n = (A,B,C) so daß für alle Punkte (x,y,z) auf dem Kreis im Raum gilt

$$Ax + By + Cz = 0 \,,$$

wobei der Radius R des Kreises gegeben ist durch

$$R = \sqrt{x^2 + y^2 + z^2}\,.$$

Figur 7 veranschaulicht in schematischer Weise die geometrischen Parameter eines projezierten Kreises, d. h. einer Ellipse mit den Hauptachsen M und N, dem Winkel $\theta$, den die Hauptachse M mit der x-Achse bildet und dem Flächennormalen-Vektor n. Sind die Zentralmomente des Objektes welches der Ellipse entspricht bekannt, so kann man die Hauptachsen M und N dieser Ellipse und den Winkel $\theta$, welchen die Hauptachse M mit der x-Achse bildet gemäß den Formeln

$$M = \frac{\tilde{m}_{2,0} + \tilde{m}_{0,2}}{2} + \sqrt{\left(\frac{\tilde{m}_{2,0} + \tilde{m}_{0,2}}{2}\right)^2 - (\tilde{m}_{2,0}\tilde{m}_{0,2} - \tilde{m}_{1,1}^2)}$$

$$N = \frac{\tilde{m}_{2,0} + \tilde{m}_{0,2}}{2} - \sqrt{\left(\frac{\tilde{m}_{2,0} + \tilde{m}_{0,2}}{2}\right)^2 - (\tilde{m}_{2,0}\tilde{m}_{0,2} - \tilde{m}_{1,1}^2)}$$

$$\theta = \frac{1}{2}\arctan\left[-2\frac{\tilde{m}_{1,1}}{\tilde{m}_{2,0} + \tilde{m}_{0,2}}\right]$$

berechnen. Zur Berechnung der Hauptachsen und des Winkels sind also lediglich die Momente bis zur zweiten Ordnung erforderlich. Zwischen den genannten Parametern gelten die folgenden nützlichen Beziehungen.

$$M = R\left[1 + \frac{(A\sin\theta + B\cos\theta)^2}{C^2}\right]^{-\frac{1}{2}}, \quad N = R\left[1 + \frac{(A\sin\theta - B\cos\theta)^2}{C^2}\right]^{-\frac{1}{2}}$$

und

$$A = -B\cdot\tan(\theta).$$

Durch Umformung erhält man

$$C = \frac{|A\sin\theta - B\cos\theta|}{\sqrt{\left(\frac{M}{N}\right)^2 - 1}}$$

und weil n ein Normalenvektor ist, gilt

$$A^2 + B^2 + C^2 = 1.$$

Mit Hilfe einiger Umformungen lassen sich die Komponenten A, B und C des Normalenvektors n wie folgt berechnen:

$$A = -B\tan\theta, \ B = \sqrt{\frac{\left(\frac{M}{N}\right)^2 - 1}{(\tan\theta\sin\theta + \cos)^2} + (\tan\theta)^2 + 1}, \ C = \sqrt{1 - A^2 + B^2}.$$

Besteht die kreisförmige Markierung aus zwei Kreisringen deren Mittelpunkte um (dx,dy) gegeneinander verschoben sind, dann kann man die Rotation $\phi$ um die Z-Achse berechnen als:

$$\phi = \arctan\left(\frac{dx}{dy}\right).$$

Die Parameter A und B müssen nun entsprechend der Z-Achsen Rotation $\phi$ wie folgt transformiert werden:

$$\tilde{A} = A\cos\phi - B\sin\phi$$
$$\tilde{B} = A\sin\phi + B\cos\phi$$

Bezüglich der Rotation um die Z-Achse befindet sich die Ellipse nach dieser Transformation in Normallage. Damit sind nun noch die Winkel für die Rotationen um die x-Achse a und die y-Achse β aus der bekannten Flächennormalen

$$n = (\tilde{A}, \tilde{B}, \tilde{C})$$

zu berechnen. Dazu transformiert man zweckmäßig die durch n bestimmte Ebene so, daß n anschließend parallel zum Vektor (0,0,1), d. h. parallel zur Z-Achse liegt. Zuerst findet eine Rotation um die X-Achse statt, gefolgt von einer Rotation um die Y-Achse:

$$\alpha = \arccos\left(\frac{C}{\sqrt{B^2 + C^2}}\right) = \arcsin\left(-\frac{B}{\sqrt{B^2 + C^2}}\right)$$

$$\beta = \arccos\left(\sqrt{B^2 + C^2}\right) = \arcsin(-A).$$

Um ein Modell des Objektes, bzw. der Hand in Normallage, d. h. parallel zur XY-Ebene in die Lage der kreisförmigen Markierung zu bringen, müssen die obigen Drehungen in umgekehrter Reihenfolge angewandt werden. Also zuerst um die Y-Achse, dann die X-Achse und zuletzt um die Z-Achse.

Aus verschiedenen Gründen kann es erforderlich sein bei einem bevorzugten Ausführungsbeispiel des erfindungsgemäßen Verfahrens die zur Binarisierung des aufgenommenen Grauwertbildes benutzte Schwelle während des Verfahrens fortlaufend neu zu bestimmen. Zum einen gibt es Schwankungen der Raumbeleuchtung (z. B. Wolken, zusätzliche Lampen), zum anderen werden durch Bewegungen der Hand lokale Helligkeitsschwankungen auf der Markierungsstruktur selbst verursacht. Letzteres tritt auf z. B. bei einer Deckenbeleuchtung und einer Neigung der Hand um die X-Achse. Die Finger werfen dann einen Schatten auf die auf der Handfläche angebrachte Markierungsstruktur. Zur Bewältigung dieser Schwierigkeiten ist es daher zweckmäßig die Schwelle an Helligkeitsschwankungen zu adaptieren.

Hierbei wird ausgenutzt, daß das Verhältnis der Durchmesser beider Kreise der Markierungsstruktur bekannt ist. Es wird nun eine Linie berechnet, die durch beide Mittelpunkte der Markierungskreise verläuft. Ihr Startpunkt ist der erste Schnittpunkt der Linie mit dem äußeren Markierungskreis und ihr Endpunkt der zweite Schnittpunkt. Figur 9 veranschaulicht in schematischer Weise die geometrischen Verhältnisse. Hierbei bedeutet th die Schwelle welche zu adaptieren ist, IC den Mittelpunkt des inneren Markierungskreises (4 da projeziert als Ellipse dargestellt) und UC den Mittelpunkt des äußeren Markierungskreises. L bedeutet die Linie durch beide Mittelpunkte. Die n Grauwerte im Bild entlang dieser Linie werden nun in ein Feld sortiert. Ist der äußere Markierungskreis beispielsweise weiß, so müssen im Fall einer optimalen Schwelle n x r Punkte unterhalb der Schwelle und n x (1-r) Punkte oberhalb der Schwelle liegen, wobei r das Verhältnis aus dem Durchmesser des kleinen Markierungskreises und dem Durchmesser des großen Markierungskreises ist. Eine solche Schwelle ist genau das n-te Element des sortierten Grauwertfeldes. Die Benutzung dieser Schwelle erscheint jedoch in der wirklichen Anwendung nicht immer optimal, statt dessen kann in einem bevorzugten Ausführungsbeispiel der Erfindung auch der Mittelwert der durchschnittlichen Grauwerte beider Cluster als neue Schwelle verwendet werden. Die alte Binarisierungsschwelle wird dann in Richtung der neu berechneten Schwelle verändert:

$$th_{neu} = th_{alt} + \kappa \cdot (th_{opt} - th_{alt}), \ \kappa \leq 1.$$

Mit unter kommt es vor, daß in einzelnen Bildern keine Markierungsstrukturen gefunden werden können. In diesem Fall kann es sein, daß sich z. B. die Beleuchtung sehr stark verändert hat. Deshalb wird nach einer bestimmten Anzahl von Bildern ohne gefundene Markierungsstruktur die Schwellwertbildung z. B. mit Zufallszahlen fortgesetzt. Wird dann der Markierer erfolgreich detektiert, dann treten die oben beschriebenen Mechanismen zur Schwellwertadaption wieder in Kraft. Ist die Markierungsstruktur erst einmal gefunden, ist es häufig nicht nötig in den folgenden Bildern jeweils die gesamte Bildebene nach einer Markierungsstruktur abzusuchen. Stattdessen wird ein Suchbereich definiert und nur in diesem Suchbereich werden die Schritte Binarisierung, Konturverfolgung und Objektidentifikation durchgeführt. Da der Suchbereich typischerweise klein gegenüber dem gesamten Bild ist, ergibt sich eine signifikante Reduzierung der Anzahl der zu untersuchenden Bildpunkte und damit eine Erhöhung der Rechengeschwindigkeit.

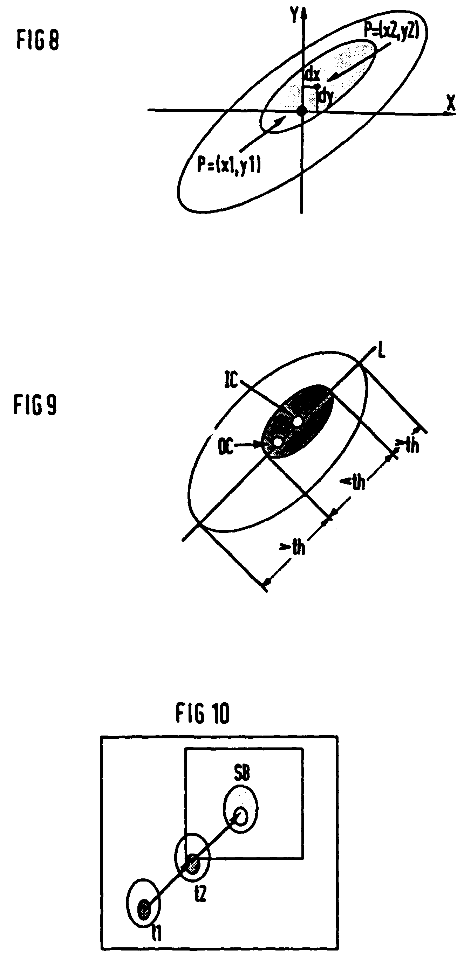

Figur 10 zeigt in schematischer Weise die Verwendung eines eingeschränkten Suchbereichs im Zusammenhang mit einer einfachen Form der Bewegungsschätzung. Die Aufgabe der Bewegungsschätzung ist es nun vorherzusagen, wo sich die Markierung im nächsten Bild befinden wird, um das Zentrum des neuen Suchbereichs dort positionieren zu können. Für Zwecke des erfindungsgemäßen Verfahren reicht häufig eine recht einfache Art der Bewegungsschätzung, ein sogenannter linearer Prädiktor, vollkommen aus. Die Geschwindigkeit der Markierungsstruktur wird aus den letzten beiden Bildern geschätzt und es wird angenommen, die Geschwindigkeit der Markierungsstruktur sei näherungsweise konstant. Damit kann ihre neue Position im folgenden Bild geschätzt und der Suchbereich dort zentriert werden. Je nach Geschwindigkeit der Markierungsstruktur wird der Suchbereich vergrößert, da bei hoher Geschwindigkeit der Hand die Wahrscheinlichkeit von plötzlichen Richtungsänderungen und damit einem Verschwinden aus einem zu kleinen Suchbereich steigt. Kann die Markierungsstruktur im festgelegten Suchbereich nicht gefunden werden, wird der Suchbereich in mehreren Schritten solange vergrößert, bis die Markierung wieder gefunden werden kann, gegebenenfalls solange bis der Suchbereich die gesamte Bildgröße umfaßt.

Natürlich sind im Zusammenhang mit dem erfindungsgemäßen Verfahren auch andere Methoden zur Bewegungsschätzung verwendbar, die z. B. die geschätzte Objektgeschwindigkeit und die Beschleunigung, sowie Wissen über die detektierte Objektbewegung allgemein, in die Bestimmung eines neuen Suchbereiches mit einbeziehen. Dem Fachmann sind aus der Literatur verschiedene Methoden zur Bewegungsschatzung die im Zusammenhang mit dem erfindungsgemaßen Verfahren vorteilhaft eingesetzt werden können bekannt.

Im Rahmen dieser Patentanmeldung wurden die folgenden Veröffentlichungen zitiert:

[Cla91] M.A. Clarkson, An easier interface, BYTE 16(2), Februar 1991.

[Kru91] M.W. Krueger, "Artificial Reality II", Addison-Wesley, 1991.

[Vin91] V.J. Vincent, Dwelving in the deph of the mind, Proc. Interface to real & virtual worlds, Montpellier, 1991.

[Wel91] P. Wellner, The DigitalDesk Calculator: Tangible Manipulation on a Desk Top Display, Proceedings of the ACM Symposium on User Interface Software and Technology (UIST '91), November 1991, Hilton Head, USA.

[Seg92] J. Segen, Gest: A learning computer vision system that recognizes gestures, to appear in Machine Learning 4.

[Pav82] T. Pavlidis: Algorithmns for Graphics and Image Processing, Springer 1982.

[Zhou89] Z. Zhou et al, Morphological Skeleton Transforms for Determining position and orientation of Pre-Marked Objects, IEEE Pacific Rim Conference on Communication, Computers and Signal Processing, pp. 301 - 305, 1989.

## Patentansprüche

1. Verfahren zur Erkennung der räumlichen Lage und Drehlage von markierten Objekten in digitalen Bildfolgen, wobei zur Markierung der Objekte exzentrisch zueinander angeordnete Strukturen verwendet werden, mit folgenden Schritten:

   a) die Bilder einer Bildfolge werden durch Anwendung einer Schwellwertoperation binarisiert, wodurch eine Binärbildfolge gebildet wird;
   b) es werden die Momente der einzelnen Segmente jedes einzelnen Binärbildes der Binärbildfolge bis zu einer vorgegebenen Ordnung ermittelt;
   c) aus den Momenten werden Parameter ermittelt, die die Lage und Drehlage der Segmente im Raum beschreiben; anhand dieser Parameter und der Momente werden die Markierungen und ihre Lage und Drehlage im Raum bestimmt;
   d) unter Verwendung der bekannten Anordnung der Markierungen auf den markierten Objekten wird schließlich die Lage und Drehlage der markierten Objekte im Raum ermittelt.

2. Verfahren nach Anspruch 1, bei dem die Konturen der einzelnen Segmente jedes einzelnen Binärbildes der Binärbildfolge ermittelt und Momente dieser Segmente aus ihren Konturen bestimmt werden.

3. Verfahren nach einem der vorhergehenden Ansprüche, bei dem kreisförmige Strukturen zur Markierung der Objekte verwendet werden.

4. Verfahren nach einem der vorhergehenden Ansprüche, bei dem der Schwellwert, welcher zur Binarisierung der Bildfolge verwendet wird, in Abhängigkeit von den laufend gemessenen Intensitäten der Bildpunkte der Markierungsstrukturen sich verändernden Beleuchtungsbedingungen dieser Strukturen angepaßt wird.

5. Verfahren nach einem der vorhergehenden Ansprüche, bei dem die Positionen der Markierungen in späteren Bildern aus den beobachteten Werten in früheren Bildern vorhergesagt werden, und bei dem diese Markierungen in geeignet gewählten Umgebungen ihrer vorhergesagten Positionen gesucht werden.

6. Verwendung eines Verfahrens nach einem der vorhergehenden Ansprüche in einem System zur automatischen Erkennung von Gesten einer Person, welche ein Datenverarbeitungssystem mit grafischer Benutzeroberfläche bedient.

## Claims

1. Method for detecting the spatial position and rotational position of marked objects in digital image sequences, structures arranged eccentrically relative to one another being used to mark the objects, having the following steps:

   a) the images of an image sequence are put into binary form by applying a threshold value operation, as a result of which a binary image sequence is formed;
   b) the moments of the individual segments of each individual binary image of the binary image sequence are determined up to a prescribed order;
   c) parameters which describe the position and rotational position of the segments in space are determined from the moments; the markings and their position and rotational position in space are determined with the aid of these parameters and the moments;
   d) finally, the position and rotational position of the marked objects in space are determined using the known arrangement of the markings on the marked objects.

2. Method according to Claim 1, in which the contours of the individual segments of each individual binary image of the binary image sequence are determined and moments of these segments are determined from their contours.

3. Method according to one of the preceding claims, in which circular structures are used to mark the objects.

4. Method according to one of the preceding claims, in which the threshold value which is used to put the image sequence into binary form is adapted, as a function of the continuously measured intensities of the pixels of the marking structures, to varying lighting conditions of these structures.

5. Method according to one of the preceding claims, in which the positions of the markings in later images are predicted from the observed values in earlier images, and in which these markings are searched for in suitably selected environments of their predicted positions.

6. Use of a method according toone of the preceding claims in a system for automatically recognizing gestures of a person who is operating a data processing system having a graphic user interface.


**Revendications**

1. Procédé de reconnaissance de la position dans l'espace et de la position de rotation d'objets marqués dans des séquences d'images numériques, des structures disposées de manière excentrique l'une par rapport à l'autre étant utilisées pour le marquage des objets, comprenant les étapes suivantes :

    a) les images d'une séquence d'images sont mises sous forme binaire en utilisant une opération de seuil, ce qui permet de former une séquence d'images binaires;
    b) les moments des différents segments de chaque image binaire individuelle de la séquence d'images binaires sont déterminés jusqu'à un ordre donné;
    c) à partir des moments, on détermine des paramètres qui décrivent la position et la position de rotation des segments dans l'espace; s'appuyant sur ces paramètres et ces moments, on détermine les marques et leur position et position de rotation dans l'espace;
    d) en utilisant l'agencement connu des marques sur les objets marqués, on détermine finalement la position et la position de rotation des objets marqués dans l'espace.

2. Procédé selon la revendication 1, dans lequel les contours des différents segments de chaque image binaire individuelle de la séquence d'images binaires sont définis et les moments de ces segments sont déterminés à partir de leur contours.

3. Procédé selon l'une des revendications précédentes, dans lequel des structures circulaires sont utilisées pour le marquage des objets.

4. Procédé selon l'une des revendications précédentes, dans lequel la valeur seuil, qui est utilisée pour mettre sous forme binaire la séquence d'images, est adaptée, en fonction des intensités mesurées en continu des points d'image des structures de marquage, aux conditions d'éclairage de ces structures qui se modifient.

5. Procédé selon l'une des revendications précédentes, dans lequel les positions des marques dans des images ultérieures sont prédites à partir des valeurs observées dans des images antérieures, et dans lequel ces marques sont cherchées dans des zones choisies de manière appropriée entourant leurs positions prédites.

6. Utilisation d'un procédé selon l'une des revendications précédentes dans un système de reconnaissance automatique de gestes d'une personne qui commande un système de traitement de données avec une interface graphique utilisateur/système.

FIG 1

FIG 2

FIG 3

FIG 4

FIG 5

FIG 7

**FIG 6**

FIG 8

FIG 9

FIG 10